(19) **Europäisches Patentamt / European Patent Office / Office européen des brevets**

(11) **EP 1 553 136 B1**

(12) **EUROPEAN PATENT SPECIFICATION**

(45) Date of publication and mention
of the grant of the patent:
**24.01.2007 Bulletin 2007/04**

(51) Int Cl.:
*C08L 23/00* (2006.01)    *C08L 23/26* (2006.01)
*C08K 9/04* (2006.01)

(21) Application number: **03741446.3**

(22) Date of filing: **17.07.2003**

(86) International application number:
**PCT/JP2003/009071**

(87) International publication number:
**WO 2004/009697 (29.01.2004 Gazette 2004/05)**

(54) **POLYOLEFIN RESIN COMPOSITION**

POLYOLEFINHARZZUSAMMENSETZUNG

COMPOSITION DE RESINE POLYOLEFINIQUE

(84) Designated Contracting States:
**AT BE BG CH CY CZ DE DK EE ES FI FR GB GR
HU IE IT LI LU MC NL PT RO SE SI SK TR**

(30) Priority: **19.07.2002 JP 2002210604**

(43) Date of publication of application:
**13.07.2005 Bulletin 2005/28**

(73) Proprietor: **Asahi Kasei Kabushiki Kaisha
Osaka-shi,
Osaka 530-8205 (JP)**

(72) Inventor: **MIYAMOTO, Ikuya
Suzuka-shi, Mie 513-0838 (JP)**

(74) Representative: **Blake, John Henry Francis
Brookes Batchellor LLP
102-108 Clerkenwell Road
London EC1M 5SA (GB)**

(56) References cited:
**WO-A1-00/61676        JP-A- 10 130 434
JP-A- 2002 030 181      JP-A- 2002 037 940
JP-A- 2002 060 555      JP-A- 2003 003 027**

- **PATENT ABSTRACTS OF JAPAN vol. 2002, no. 06, 4 June 2002 (2002-06-04) & JP 2002 037940 A (GRAND POLYMER CO LTD), 6 February 2002 (2002-02-06)**
- **PATENT ABSTRACTS OF JAPAN vol. 2003, no. 05, 12 May 2003 (2003-05-12) & JP 2003 003027 A (IDEMITSU PETROCHEM CO LTD), 8 January 2003 (2003-01-08)**
- **PATENT ABSTRACTS OF JAPAN vol. 2002, no. 06, 4 June 2002 (2002-06-04) & JP 2002 060555 A (SEKISUI CHEM CO LTD), 26 February 2002 (2002-02-26)**
- **PATENT ABSTRACTS OF JAPAN vol. 1998, no. 03, 27 February 1998 (1998-02-27) & JP 09 302170 A (MITSUI PETROCHEM IND LTD), 25 November 1997 (1997-11-25)**
- **PATENT ABSTRACTS OF JAPAN vol. 007, no. 163 (M-229), 16 July 1983 (1983-07-16) & JP 58 069025 A (TOYO INK SEIZO KK), 25 April 1983 (1983-04-25)**

## Description

## Technical Field

The present invention relates to a polyolefin resin composition that is excellent in heat resistance and flame retardancy, and to a production method thereof.

## Background Art

Polyolefin resins represented by polyethylene, polypropylene and the like have been applied to various uses such as wrapping materials, automobile materials, and home appliance materials. In order to improve the mechanical properties and heat resistance of the polyolefin resins, processes comprising mixing inorganic substances such as talc and glass fiber as a filler have been conventionally considered. According to these processes, however, the inorganic filler aggregates in the resin in the order of micrometers so that a considerably large amount of the inorganic filler is required to achieve the desired effects. Accordingly, these processes are not suitable to the use where weight saving is required.

On the other hand, in a composite material prepared by melt compounding layered silicate treated with a cationic surfactant and a polar polymer such as nylon and polyacetal, layered silicate is dispersed therein in the order of nanometers. Therefore, it has been reported that elasticity modulus and heat resistance of the resin can be improved by adding layered silicate in a relatively small amount. However, this method is applicable only to the polar polymer having a high affinity for layered silicate, and not to polyolefins such as polyethylene and polypropylene.

To avoid such problems, JP-A-10-30039 discloses a method for melt compounding a modified polyolefin resin, which is prepared by block or graft copolymerizing an unsaturated carboxylic acid or a derivative thereof with a monomer having the product of reaction ratio and the unsaturated carboxylic acid or derivative thereof of 1 or less (e.g., styrene), and layered silicate subjected to modification treatment. It has been reported that a filler of layered silicate can be uniformly dispersed in the polyolefin resin according to this method and the polyolefin composite material obtained thereby is excellent in elasticity modulus and heat resistance. According to this method, however, without block or graft copolymerization of an unsaturated carboxylic acid or a derivative thereof and a monomer such as styrene, the elasticity and heat resistance effects are not exhibited. As a result, the problem caused is that the production process becomes complicated. Further, since the polyolefin is modified in large quantities, the intrinsic properties of the polyolefin such as its hydrophobic nature are disadvantageously destroyed.

While, JP-A-10-182892 discloses a method for advantageously dispersing layered clay minerals in the polyolefin resin matrix using layered silicate intercalated by polyolefin oligomer containing functional groups. Specifically, a specific amount of maleic acid modified polyolefin oligomer is added to achieve high dispersion of layered silicate in polypropylene.

However, it has been found through the studies by the present inventor that although the methods disclosed in prior documents can be applied to polypropylene, layered silicate cannot be highly dispersed in a polyethylene resin such as high density polyethylene (HDPE) and low density polyethylene (LDPE) according to conventional methods.

## Description of the Invention

The present inventor has found that for the polyolefin resin composition comprising a modified layered silicate, a modified polyolefin resin, and a polyolefin resin, if the modified polyolefin resin has a carboxylic acid, which satisfies specific conditions, then the modified layered silicate, which is obtained by treatment with a surfactant, can be uniformly dispersed in every type of polyolefin resin containing polyethylene. With these conditions, the thus-obtained polyolefin resin composition of the present invention is improved in heat resistance and flame retardancy without destroying characteristics such as the hydrophobic nature which a polyolefin resin essentially has.

Further, the present inventor has found that when non-ionic surfactant is used as a modifier for layered silicate, a polyolefin resin composition can be easily prepared because a purification process of modified layered silicate is not necessary after the treatment of layered silicate.

Namely, the present invention is as follows:

1. A polyolefin resin composition having modified layered silicate, modified polyolefin resin and polyolefin resin, wherein the modified polyolefin resin has a carboxylic acid modification degree (Pc1) of 0.030 to 0.100, which is obtained from infrared absorption spectrum using Equation (1), and a hydrogen bonding carboxyl modification degree (PcH) of 0.80 or more, which is obtained using Equation (2).

$$Pc1 = ICO3/ICH_2 \qquad (1)$$

$$PcH = ICO2/(ICO1 + ICO2) \qquad (2)$$

wherein

$ICH_2$: Infrared absorption peak at 2920 $cm^{-1}$

$ICO1$: Infrared absorption peak at 1780 to 1790 $cm^{-1}$

$ICO2$: Infrared absorption peak at 1710 to 1720 $cm^{-1}$

$ICO3$: $ICO1 + ICO2$

2. The polyolefin resin composition according to the above 1, wherein a composition mass ratio of the modified layered silicate/the modified polyolefin resin/the polyolefin resin is 0.01-40/0.1-50/50-99.89.

3. The polyolefin resin composition according to either of the above 1 and 2, wherein the modified layered silicate is prepared by interlayer insertion process comprising inserting a non-ionic surfactant into the interlayer spaces of the layered silicate.

4. The polyolefin resin composition according to any of the above 1 to 3, wherein the polyolefin resin is a polyethylene resin.

5. A process for preparing the polyolefin resin composition according to any of the above 1 to 4, which process includes melt compounding the modified layered silicate, the modified polyolefin resin and the polyolefin resin.

## Brief Description of Drawings

Fig. 1 shows an infrared absorption spectrum of the modified polyolefin resin used in Example 1.

Fig. 2 is the enlarged diagram of Fig. 1 at 1600 to 1900 $cm^{-1}$ of the infrared absorption spectrum.

Fig. 3 shows an infrared absorption spectrum of the modified polyolefin resin used in Comparative Example 4.

Fig. 4 is the enlarged diagram of Fig. 3 at 1600 to 1900 $cm^{-1}$ of the infrared absorption spectrum.

Fig. 5 is a graph showing X-ray diffraction patterns of the polyolefin resin composition films obtained in Example 1 and Comparative Examples 1 and 4 of the present invention.

## Best Mode for Carrying Out the Invention

Hereinafter, the present invention is illustrated in detail.

The modified layered silicate used in the present invention is obtained by modifying layered silicate. The layered silicate indicates 2:1 type clay minerals such as talc, pyrophillite, smectites, vermiculite, and mica. Any one of these layered silicates may be obtained by purifying natural minerals or by conducting hydrothermal synthesis, melt compounding synthesis, or calcining synthesis. Among them, smectites and mica, especially fluorinated synthesized mica and the like are preferable. Examples of species of smectites include natural montmorillonite, beidellite, synthesized hectorite, synthesized saponite and the like.

In the present invention, it is acceptable if the modified layered silicate comprises bonding the host of layered silicate with other compounds through chemical bonding, ionic bonding, hydrogen bonding and the like.

Specific modification methods include, for example, an interlayer insertion process comprising inserting a compound capable of hydrogen-bonding with negative charges into interlayer spaces formed between each layer of the layered silicate.

The compound used for the interlayer insertion process is not particularly limited, and, for instance, long chain alcohol, carboxylic acid, a surfactant, a silane coupling agent and the like may be used. Among the aforementioned compounds, a surfactant is preferable.

As the surfactant, those being anionic, cationic, non-ionic, and amphoteric can be used. Cationic and non-ionic surfactants are preferred.

The examples of the cationic surfactant include quaternary ammonium salt such as dodecyl trimethyl ammonium bromide, dodecyl trimethyl ammonium chloride and octadecyl trimethyl ammonium bromide, and amines such as octadecyl trimethyl amine, and the like.

The hydrophilic portion of the non-ionic surfactant includes ethylene oxide (EO), propylene oxide (PO), a copolymer thereof, and a hydroxyl group and the like. The hydrophobic portion of the non-ionic surfactant includes a saturated or unsaturated long chain alkyl group and the like. Accordingly, specific examples of the non-ionic surfactant include ethers of polyethylene glycol such as polyethylene glycol stearyl ether and polyethylene glycol lauryl ether, carboxylic esters of polyethylene glycol such as polyethylene glycol stearate and polyethylene glycol laurate.

As a modification, the layered silicates may be three-dimensionally cross-linked to each other when a silanol group at the terminal of the layered silicate is treated with a coupling agent.

To make the polyolefin resin composition exhibit high heat resistance and flame retardancy in the present invention, it is preferred to set the interlayer space distance (h0) of the raw material modified layered silicate at a specific value. The distance is approximately more than 5.83 angstroms and less than 20.00 angstroms and more preferably more than 8.90 angstroms and less than 15.50 angstroms.

The value of h0 can be obtained from the following equation using the result of X-ray diffraction measurement.

$$h0 \text{ (angstrom)} = d0 \text{ (angstrom)} - 9.5,$$

$$\text{wherein } d0 \text{ (angstrom)} = 1.54 / 2 \sin\theta$$

When a modifier of the layered silicate such as a surfactant is used, h0 can be controlled by the chain length of the hydrophobic portion. The longer the chain length, the greater h0. When a cationic surfactant is used, h0 can be changed by the head group of ammonium salt (primary, secondary or tertiary ammonium salt). Even when the same surfactant is used, h0 can be controlled by using layered silicate having different values of charge exchange capacity (CEC).

Further, to make the polyolefin resin composition of the present invention show better heat resistance and higher flame retardancy, the aspect ratio (layer length/layer thickness) of fine crystal of layered silicate is preferably 500 or more, more preferably 3000 or more. The aspect ratio of the layered silicate can be measured using a scanning electron microscope (SEM) or a transmitting electron microscope (TEM).

Next, the modified polyolefin resin used in the present invention refers to polyolefin resins having chemically modified main and side chains. Chemical modification with a modification group containing at least a carbonyl group would be sufficient enough. The modification group may contain a functional group such as a hydroxyl group, a nitrile group, and an imide group in addition to the carbonyl group. The modification group is preferably present at a terminal of the molecule of the polyolefin resin. The polyolefin resin having modification groups at both terminals is also preferably used. When the polyolefin resin has a branched structure, it may have 3 or more terminals. In this case, the modification group can exist basically at any of the terminals, preferably at the terminal of the main chain. In addition, such a polyolefin resin that has modification groups at plural terminals or that contains different types of modification groups in plural is also preferably used.

The production process of the modified polyolefin resin is not particularly limited, and includes a polymerization type process comprising polymerizing a polyolefin resin followed by modification, a process comprising conducting modification upon decomposition of a high-molecular weight polyolefin resin, or the like. Among the aforementioned processes, the polymerization type process is preferred.

The polyolefin resins used for the modified polyolefin resin of the present invention include, for instance, an $\alpha$-olefin homopolymer such as ethylene, propylene, butene-1 and hexene-1, and a random or block copolymer comprising two or more of the $\alpha$-olefin homopolymers such as polyethylene, polypropylene, polybutene-1, polyisobutene, and an ethylene-propylene copolymer. In addition, cycloolefins represented by APEL™ manufactured by Mitsui Chemicals, Inc. and ZEONEX™ manufactured by Zeon Corporation are also advantageously used.

The polyethylene resin includes conventional low-density polyethylene (LDPE), straight-chain low- and medium-density polyethylene (MDPE) prepared by copolymerizing ethylene and $\alpha$-olefin, ethylene-$\alpha$-olefin copolymerized plas-tomer or elastomer, high-density polyethylene (HDPE), ethylene-propylene copolymer, ethylene propylene-diene rubber (EPDM) and the like. These compounds can be used alone or in combination.

The weight average molecular weight (Mw) of the modified polyolefin resin is not limited, but it is preferably 1000 or more for compatibility with the polyolefin resin.

To make the polyolefin resin composition of the present invention exhibit high heat resistance and flame retardancy, the modified polyolefin resin has a carboxylic acid modification degree (Pc1) of preferably 0.030 to 0.100 and more preferably 0.040 to 0.060. When Pc1 is lower than 0.030, the carboxylic acid modification degree becomes low on the whole so that the resultant polyolefin resin composition is not improved in physical properties. In the case of Pc1 exceeding 0.100, too, the physical properties of the polyolefin resin composition are not improved.

Further, in the case where Pc1 ranges from 0.030 to 0.100 and hydrogen-bonding carboxyl modification degree (PcH) is 0.80 or more, dispersibility of modified layered silicate in the resultant polyolefin resin composition becomes extremely high so that the heat resistance and flame retardancy are further enhanced. PcH is preferably 0.85 or more, more preferably 0.88 or more.

Maximum PcH is not particularly limited. The modified polyolefin resin may be modified with hydrogen-bonding carboxyl group only (i.e., PcH=1).

The carboxylic acid modification degree (Pc1) and the hydrogen-bonding carboxyl modification degree (PcH) of the modified polyolefin resin composition of the present invention are obtained by the infrared absorption spectrum measurement.

The carboxylic acid modification degree (Pc1) and the hydrogen-bonding carboxyl modification degree (PcH) are defined by the following equations (1) and (2).

$$Pc1 = ICO3 / ICH_2 \qquad (1)$$

$$PcH = ICO2 / (ICO1 + ICO2) \qquad (2)$$

wherein

$ICH_2$: Infrared absorption peak at 2920 cm$^{-1}$
ICO1: Infrared absorption peak at 1780 to 1790 cm$^{-1}$
ICO2: Infrared absorption peak at 1710 to 1720 cm$^{-1}$
ICO3: ICO1 + ICO2

Herein, $ICH_2$ is a peak infrared absorption intensity associated with asymmetric stretching vibration of a methylene group, and is observed in the whole polyolefin resin since it is exhibited at the back bone of the modified polyolefin resin. Occasionally the peak top reaches $(2920\pm3)$cm$^{-1}$. In such a case, the peak infrared absorption intensity is defined as $ICH_2$.

On the other hand, ICO1 and ICO2 are both peak infrared absorption intensities associated with the stretching vibration of carbonyl. ICO1 is the peak infrared absorption intensity derived from carbonyl contained in carboxylic acid anhydride produced by dehydrocondensation polymerization of carboxylic acids. ICO2 is the peak infrared absorption intensity derived from carbonyl of carboxylic acid.

The associations of these peak infrared absorption intensities are described, for example, in "Infrared Absorption Spectrum" (written by K. Nakanishi, P.H. Solomon and N. Furudate, published by Nankodo). ICO3 is the sum of ICO1 and ICO2.

The measurement of infrared absorption spectrum used in the present invention is hereinafter illustrated.

In order to measure the infrared absorption spectrum of the modified polyolefin, a solid sample of a modified polyolefin resin is crushed and the resultant flake is subjected to infrared absorption measurement according to a transmission method. The resultant flakes are not dissolved in a solvent and cast into a film or the like to measure the infrared absorption. This is because there is a possibility that the modification degree of the modified polyolefin resin changes at the dissolving step, drying step or the like.

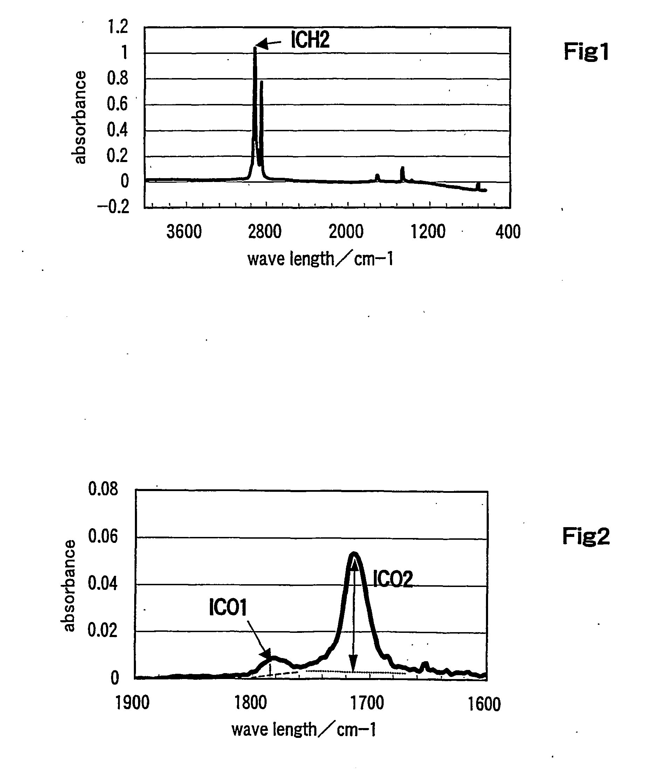

The calculation of the modification degrees Pc1 and PcH are specifically described below referring to Figs. 1 to 4.

Fig. 1 is a chart showing the infrared absorption spectrum of the modified polyolefin resin obtained in Example 1. The peak corresponding to $ICH_2$ is shown in the chart. Fig. 2 is a chart magnifying the infrared absorption spectrum at around 1600 to 1900 cm$^{-1}$ in Fig. 1 where the absorption relevant to the carbonyl groups is observed. The peaks corresponding to ICO1 and ICO2 are each shown in Fig. 2.

The infrared absorption intensities ICO1 and ICO2 are each obtained by drawing a base line on the chart and measuring the length of a perpendicular line dropped from the peak top to the base line to define ICO1 and ICO2. Accordingly, Pc1 and PcH obtained in Figs. 1 and 2 are 0.058 and 0.88, respectively.

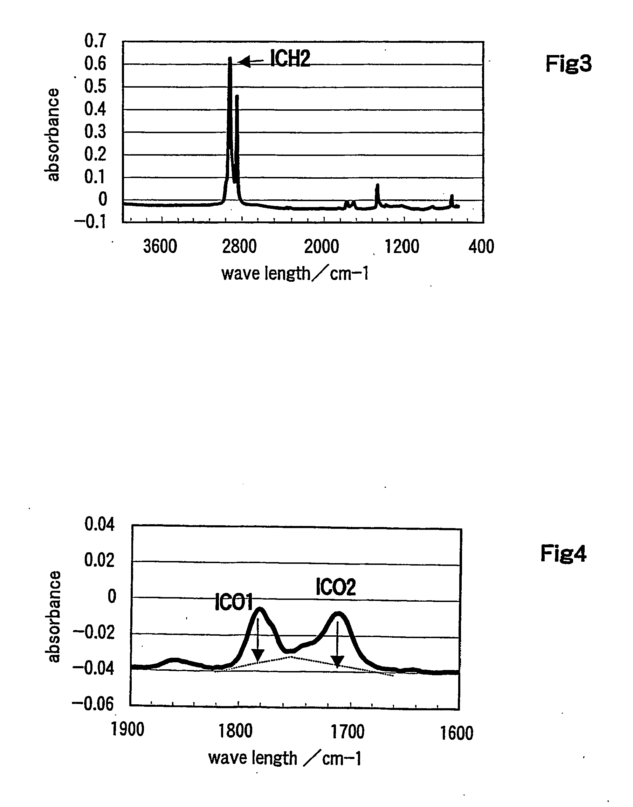

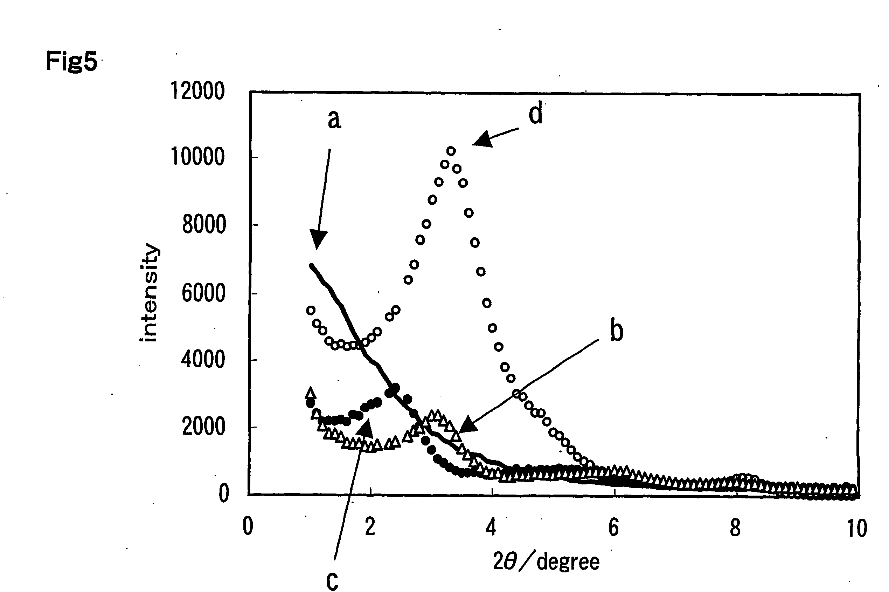

Fig. 3 is a chart showing the infrared absorption spectrum of the modified polyolefin resin obtained in Comparative Example 4. Fig. 4 is a chart magnifying the spectrum at around 1600 to 1900 cm$^{-1}$ in Fig. 3. According to the same calculation manner as in Figs. 1 and 2, Pc1 and PcH in Figs. 3 and 4 become 0.101 and 0.49, respectively.

As long as modified polyolefin resins satisfy the above-mentioned requirements, they are usable in the present invention. Preferred examples thereof include commercial products such as Hi-wax™ 2203A and Hi-wax™ 1105A manufactured by Mitsui Chemicals, Inc., which are maleic acid modified olefin oligomers. Of these, Hi-wax™ 2203A is more preferred.

The modified polyolefin resin which can be used in the present invention is illustrated above. The polyolefin resin used for the polyolefin resin composition together with the modified polyolefin resin can be the same polyolefin resin as that used for the modified polyolefin resin. The polyolefin resin may be the same as or different from that used for the modified polyolefin resin.

The foregoing describes the modified layered silicate, the modified polyolefin resin, and the polyolefin resin which compose the polyolefin resin composition of the present invention.

The modified layered silicate contributes the improvement of the heat resistance and flame retardancy of the polyolefin resin composition. However, if the ratio of the modified layered silicate is too large, the melt viscosity increases to deteriorate processability. Therefore, the composition mass ratio of the modified layered silicate/the modified polyolefin resin/the polyolefin resin is necessary to be 0.01-40/0.1-50/50-99.89, preferably 0.1-20/2-30/60-97.9, and more preferably 2-10/5-10/80-93.

Additives can be added to the polyolefin resin composition of the present invention. These additives are commonly used in this field and include, e.g., antioxidants, antiblocking agents, thermal stabilizers, ultraviolet absorbers, flame retardants, dyes, pigments, and plasticizers. If necessary, an inorganic or organic reinforcing agent can be added. Further, it is also possible to blend resins other than a polyolefin resin.

Next, the method for producing the polyolefin resin composition of the present invention is illustrated.

As for the mixing method of the modified layered silicate, the modified polyolefin resin and the polyolefin resin, the methods employed in this field can be used. For example, these components may be mixed and dispersed in the common manner using a kneader such as a Banbury mixer and a roll mixer or a twin-screw extruder. When a kneader is used, each component is preferably mixed in the order as described in the following methods. (1) A mixing method comprising dry blending and kneading the modified polyolefin resin and the modified layered silicate for about 5 to 10 minutes, and subsequently adding the polyolefin resin to further knead the components for about 5 to 10 minutes. (2) A mixing method comprising melt kneading the modified polyolefin resin and the modified layered silicate to prepare a master batch, and mixing the polyolefin resin in a solid state to a part of the master batch followed by melt kneading. When an extruder is used, there can be exemplified (3) a mixing method comprising mixing the modified polyolefin resin, the modified layered silicate and the polyolefin resin in solid states prior to kneading and then charging the mixture in an extruder to melt extrude.

The polyolefin resin composition of the present invention obtained as described above is excellent in heat resistance and flame retardancy since the modified layered silicate is uniformly dispersed in the composition. In the present invention, the dispersibility is evaluated in the following manner.

Specifically, in the present invention, whether the dispersibility is high or not is evaluated from a layer distance (h) of the modified layered silicate obtained by the X-ray diffractometry.

A polyolefin resin composition having a large value of h, e.g., 65 angstroms or more has remarkably high heat resistance and flame retardancy. The layer distance (h) of the modified layered silicate contained in the polyolefin resin composition can be obtained from the following equation according to the X-ray diffractometry.

$$h \ (angstrom) = d \ (angstrom) - 9.5$$

In this equation, the value 9.5 angstroms refers to the thickness of one of the layers constituting the modified layered silicate. This value does not change much regardless of which modified layered silicate is used. The value d can be calculated from the following Bragg's equation using peak position ($2\theta$) relevant to the base reflection at face 001 of the modified layered silicate, which is obtained by X-ray diffraction measurement.

$$d \ (angstrom) = 1.54 \ / \ 2 \ \sin\theta$$

Referring to Fig. 5, the evaluation method is further described. The "patterns a, b and c" in Fig. 5 refer to X-ray diffraction patterns of the modified layered silicate in the polyolefin resin composition obtained in Example 1 and Comparative Examples 1 and 4, respectively. The "pattern d" in Fig. 5 refers to an X-ray diffraction pattern of the modified layered silicate as a raw material (Nanomer 1.30P).

The "pattern a" of the modified layered silicate in the polyolefin resin composition of Example 1 in Fig. 5 is not exhibited even when the peak position is at a low angle $2\theta=1$. As a result, it can be seen that the value h exceeds 65 angstroms (h=78.8 angstroms when $2\theta=1$). From the fact that the value h calculated from the peak position ($2\theta=3.4$) of the "pattern d" of the modified layered silicate used for the raw material is 16.5 angstroms, it can be said that the modified layered silicate in the polyolefin resin composition exhibiting the "pattern a" is remarkably highly dispersed.

On the other hand, even if a peak position shifts to the lower angle side than $2\theta=3.4$, which is the peak position of the "pattern d" of the raw material modified layered silicate, like the peak position $2\theta=2.3$ of the "pattern c" of the modified layered silicate in the polyolefin resin composition of Comparative Example 4, the heat resistance and flame retardancy of the polyolefin resin does not improve much when the value h calculated from the "pattern c" is 28.9 angstroms, which is smaller than 65 angstroms. Therefore, it can be said that the dispersion is insufficient.

Further, when the same peak position 2θ=3.4 as the raw material modified layered silicate is observed by the X-ray diffraction of a polyolefin resin composition like the "pattern b" of the layered silicate in the polyolefin resin composition of Comparative Example 1, the modified layered silicate does not disperse in the composition. Therefore, the physical properties of the composition hardly improve.

Namely, the polyolefin resin composition having the value h of 65 angstroms or more is excellent in heat resistance and flame retardancy. More preferable value of h is 75 angstroms or more.

The foregoing describes the polyolefin resin composition of the present invention.

As is obvious, the polyolefin resin composition of the present invention can be formed into a film by extrusion forming, such as inflation forming with cool water or cool air, T-die extrusion forming, and extrusion lamination forming.

The polyolefin resin composition of the present invention can be also formed into a wrap film by further stretching the above film. In addition, the composition can be used for molded articles prepared by injection molding, blow molding or the like, expansion molded articles prepared by bead expansion, extrusion expansion or the like, and sheet products prepared by board molding or the like.

Hereinafter, the present invention is specifically illustrated referring to Examples, but not limited thereto.

The measurement methods and the like employed in the present invention are as follows:

(1) Evaluation of dispersion of modified layered silicate (X-ray diffractometry)

Using X-ray diffraction apparatus RINT™ 2000 manufactured by Rigaku Corporation, a film of the polyolefin resin composition (2 mm thick) is measured for dispersion of the modified layered silicate therein with Kα ray of Cu. Other measurement conditions are as follows:

| | |
|---|---|
| Acceleration voltage: | 40 kV |
| Aceleration current: | 180°C |
| Scanning rate: | 2°/min |
| 1/6° acceptance slit width of dispersing and scattering slit: | 0.15 mm |

(2) Infrared absorption measurement of modified polyolefin resin (IR measurement)

Microscopic IR measurement apparatus with IR μs manufactured by Spectra Tech Corp. is used. A pellet of the modified polyolefin resin is crushed and the resultant flake is subjected to the infrared absorption measurement according to a transmission process. The measurement conditions are as follows:

| | |
|---|---|
| Measurement range: | 400 to 4000 $cm^{-1}$ |
| Resolving power: | 4 $cm^{-1}$ |

(3) Flame retardancy test

According to ASTM (American Society for Testing and Materials) E1354 (burning test of construction material), a test piece (100 mm long x 3 mm thick) is exposed to a light having a heat amount of 50 $kW/m^2$ using a cone calorimeter, and a maximum heat release rate (hereinafter referred to as HRR) is determined as an index to the flame retardancy. The maximum HRR is an amount showing a calorific value upon burning, and a smaller value means that combustion is inhibited to make the test piece difficult to burn.

(4) Heat distortion temperature

According to JIS (Japanese Industrial Standard)-K7207, a heat transfer medium is heated at a constant rate while a prescribed flexural stress is applied to a test piece in a heat bath, and the temperature of the medium at the time when the deflection of the test piece reaches a prescribed value is determined as a heat distortion temperature.

A test piece having a heat distortion temperature of 90°C or higher, is evaluated as good (O). A test piece having a heat distortion temperature of 85°C or higher and lower than 90°C, is evaluated as fair (Δ). A test piece having a heat distortion temperature lower than 85°C, is evaluated as poor (X).

Example 1

4 g of organic modified montmorillonite Nanomer™ 1.30P manufactured by Nanocore Technology Corp. was used as modified layered silicate, and 16 g of Hi-wax™ 2203A manufactured by Mitsui Chemicals, Inc. was used as the modified polyolefin resin. Powdered modified layered silicate and powdered modified polyolefin resin were mixed at 120°C for 5 minutes using a Labo Plastomill™ MR50 Type kneader manufactured by Toyo Seiki Co., Ltd. To the resultant mixture, 80 g of high-density polyethylene resin S360 manufactured by Asahi Kasei Corp. was added as a polyolefin resin. Then, further kneading was performed for 10 minutes to obtain a polyolefin resin composition. The kneading conditions are as follows:

| | |
|---|---|
| Rotating speed: | 50 rpm |
| Temperature: | 180°C |

The resultant composition was compressed under pressure at 180°C and quickly cooled. Then, the resultant was stretched to be 3×3 times using a batch type bi-axial stretching apparatus to obtain a film having a thickness of about 30 μm.

Using the resultant film, HRR and heat distortion temperature were evaluated, and the results are shown in Table 1. In addition, the infrared absorption spectrum of the modified polyolefin resin used in the present invention is shown in Figs. 1 and 2. The X-ray diffraction pattern of the resultant polyolefin resin composition film is shown by the "pattern a" in Fig. 5 and that of the raw material modified layered silicate is shown by the "pattern d" in Fig. 5.

Example 2

A polyolefin resin composition film was obtained under the same conditions as in Example 1 except that Hi-wax™ 1105A manufactured by Mitsui Chemicals, Inc. was used instead of Hi-wax™ 2203A.

The HRR and heat distortion temperature of the resultant polyolefin resin composition film were evaluated, and the results thereof are shown in Table 1.

Example 3

As a cationic surfactant, 4 g of octadecyl trimethyl ammonium bromide (manufactured by Aldrich, Inc.) was dissolved in 200 g of ethanol (the resultant is referred to as Solution A). Further, as layered silicate, 5 g of synthesized fluorinated mica SOMASIF™ (ME100) manufactured by CO-OP Chemical Co., Ltd. was dispersed in 300 g of deionized water using a homomixer (the resultant is referred to as Solution B). Solutions A and B were mixed and stirred at 50°C for 24 hours.

The resultant precipitates were separated by filtration, washed with ethanol several times, and then vacuum dried at 100°C for 5 hours to obtain modified layered silicate (ME100C18). 4 g of the resultant modified layered silicate and 16 g of modified polyethylene resin (Hi-wax 2203A manufactured by Mitsui Chemicals, Inc.) were mixed at 120°C for 5 minutes using Labo Plastomill MR50 Type manufactured by Toyo Seiki Co., Ltd. To the mixture, 80 g of high-density polyethylene resin S360 manufactured by Asahi Kasei Corp. was added and further kneaded for 10 minutes to obtain a polyolefin resin composition. The mixing conditions are as follows:

| | |
|---|---|
| Rotating speed: | 50 rpm |
| Temperature: | 180°C |

The resultant polyphenylene ether was molded into a film in the same manner as in Example 1 to obtain a polyolefin resin composition film.

The HRR and heat distortion temperature of the film were evaluated. The results are shown in Table 1.

Example 4

A polyolefin resin composition film was obtained under the same conditions as in Example 3 except that natural montmorillonite Kunipia™ F (CEC=110 meq/100g) manufactured by Kunimine Industries Co., Ltd. was used as modified layered silicate (MGC18) instead of layered silicate of synthesized fluorinated mica. The evaluation results of the film are shown in Table 1.

Example 5

As a non-ionic surfactant, 4 g of polyoxymethylene stearyl ether Brij 72 (manufactured by Aldrich, Inc.) and 10 g of natural montmorillonite Kunipia™ F (CEC=110 meq/100 g) manufactured by Kunimine Industries Co., Ltd. were mixed and heated at 50°C for 10 minutes. The resultant sample was compressed under a pressure of 1 MPa to prepare a pelletized sample. The pelletized sample was left at 60°C for 10 hours to prepare modified layered silicate (MG Brij 72).
4 g of the resultant modified layered silicate, 16 g of Hi-wax 2203A, which was used as a modified polyolefin resin in Example 1, and, as a polyolefin resin, 80 g of high-density polyethylene resin S360 manufactured by Asahi Kasei Corp. were mixed in the same manner as in Example 1.
The resultant composition was extruded using a T-die type film extruder (Toyo Seiki Co., Ltd.) to prepare a film of polyolefin resin composition having thickness of 30 $\mu$m and width of 30 cm.
The HRR and heat distortion temperature of the film was evaluated. The results are shown in Table 1.

Comparative Example 1

A film was prepared by mixing, in the same manner as in Example 1, 80 g of high-density polyethylene resin S360 manufactured by Asahi Kasei Corp., 16 g of unmodified low-molecular weight polyethylene resin (manufactured by Aldrich, Inc.; Mw=6000) and 4 g of modified layered silicate Nanomer™ 1.30P manufactured by Nanocore Technology Corp., which was used in Example 1.
The HRR and heat distortion temperature of the resultant film were evaluated. The results are shown in Table 1. The X-ray diffraction pattern of the film is shown by the "pattern b" in Fig. 5.

Comparative Example 2

A film was prepared under the same conditions as in Example 1 except that modified layered silicate was not used.
The HRR and heat distortion temperature of the resultant film were evaluated. The results are shown in Table 1.

Comparative Example 3

A film was prepared in the same manner as in Example 1 except that Yumex™ 1010 manufactured by Sanyo Kasei Co., Ltd. was used as a modified polyolefin resin instead of Hi-wax™ 2203A manufactured by Mitsui Chemicals, Inc.
The HRR and heat distortion temperature of the resultant film were evaluated. The results are shown in Table 1.

Comparative Example 4

A film was prepared in the same manner as in Example 1 except that Yumex™ 2000 manufactured by Sanyo Kasei Co., Ltd. was used as a modified polyolefin resin instead of Hi-wax™ 2203A manufactured by Mitsui Chemicals, Inc.
The HRR and heat distortion temperature of the resultant film were evaluated. The results are shown in Table 1.
The infrared absorption spectrum of the modified polyolefin resin used in this comparative example is shown in Figs. 3 and 4. The X-ray diffraction pattern of the resultant polyolefin resin composition sheet is shown by the "pattern c" in Fig. 5.

Comparative Example 5

A film was prepared in the same manner as in Example 1 except that Yumex™ 1001 manufactured by Sanyo Kasei Co., Ltd. was used as the modified polyolefin resin instead of Hi-wax™ 2203A manufactured by Mitsui Chemicals, Inc.
The HRR and heat distortion temperature of the resultant film were evaluated. The results are shown in Table 1.

Table 1

| | Modified layered silicate | Added amount | h | Modified polyolefin resin | Added amount | Pc1 | PcH | Polyolefin resin | Added amount | HRR | Heat distortion temp. |
|---|---|---|---|---|---|---|---|---|---|---|---|
| Ex. 1 | Nanomer 1.30P | 4 | >65 | HW2203A | 16 | 0.058 | 0.88 | S360 | 80 | 650 | ○ |
| Ex. 2 | Nanomer 1.30P | 4 | >65 | HW1105A | 16 | 0.095 | 0.92 | S360 | 80 | 650 | ○ |
| Ex.3 | ME100C18 | 4 | >65 | HW2203A | 16 | 0.058 | 0.88 | S360 | 80 | 580 | ○ |
| Ex. 4 | MGC18 | 4 | >65 | HW2203A | 16 | 0.058 | 0.88 | S360 | 80 | 800 | ○ |
| Ex. 5 | MGBrij72 | 4 | >65 | HW2203A | 16 | 0.058 | 0.88 | S360 | 80 | 720 | ○ |
| Comp. Ex. 1 | Nanomer 1.30P | 4 | 16.5 | Unmodified polyolefin | 16 | -- | -- | S360 | 80 | 1250 | × |
| Comp. Ex. 2 | -- | -- | -- | HW2203A | 16 | 0.058 | 0.88 | S360 | 80 | 1100 | × |
| Comp. Ex. 3 | Nanomer 1.30P | 4 | 24.5 | Yumex 1010 | 16 | 0.296 | 0.25 | S360 | 80 | 850 | × |
| Comp. Ex. 4 | Nanomer 1.30P | 4 | 28.9 | Yumex 2000 | 16 | 0.101 | 0.49 | S360 | 80 | 800 | × |
| Comp. Ex. 5 | Nanomer 1.30P | 4 | 27.5 | Yumex 1001 | 16 | 0.181 | 0.65 | S360 | 80 | 800 | × |

**Industrial Applicability**

The polyolefin resin composition of the present invention can be used to make a molded article having high heat resistance and flame retardancy.

**Claims**

1. A polyolefin resin composition comprising modified layered silicate, modified polyolefin resin and polyolefin resin, wherein the modified polyolefin resin has a carboxylic acid modification degree (Pc1) of 0.030 to 0.100, which is obtained from infrared absorption spectrum using Equation (1), and a hydrogen bonding carboxyl modification degree (PcH) of 0.80 or more, which is obtained using Equation (2).

$$Pc1 = ICO3/ICH_2 \qquad (1)$$

$$PcH = ICO2/(ICO1 + ICO2) \qquad (2)$$

wherein
$ICH_2$: Infrared absorption peak at 2920 cm$^{-1}$
$ICO1$: Infrared absorption peak at 1780 to 1790 cm$^{-1}$
$ICO2$: Infrared absorption peak at 1710 to 1720 cm$^{-1}$
$ICO3$: ICO1 + ICO2

2. The polyolefin resin composition according to claim 1, wherein a composition mass ratio of the modified layered silicate/the modified polyolefin resin/the polyolefin resin is 0.01-40/0.1-50/50-99.89.

3. The polyolefin resin composition according to either of claims 1 and 2, wherein the modified layered silicate is prepared by interlayer insertion process comprising inserting a non-ionic surfactant into the interlayer spaces of the layered silicate.

4. The polyolefin resin composition according to any of claims 1 to 3, wherein the polyolefin resin is a polyethylene resin.

5. A process for preparing the polyolefin resin composition according to any of claims 1 to 4, which process comprises melt compounding the modified layered silicate, the modified polyolefin resin and the polyolefin resin.

**Patentansprüche**

1. Polyolefinharzzusammensetzung, umfassend modifiziertes Schichtsilikat, modifiziertes Polyolefinharz und Polyolefinharz, wobei das modifizierte Polyolefinharz einen Carbonsäuremodifizierungsgrad (Pc1) von 0,030 bis 0,100 aufweist, welcher aus einem Infratrotabsorptionsspektrum unter Verwendung der Gleichung (1) erhalten wird, und einen Wasserstoffbindungs-Carboxylmodifizierungsgrad (PcH) von 0,80 oder mehr, welcher unter Verwendung von Gleichung (2) erhalten wird:

$$Pc1 = ICO3/ICH_2 \qquad (1)$$

$$PcH = ICO2/(ICO1 + ICO2) \qquad (2)$$

worin
$ICH_2$: Infrarotabsorptionspeak bei 2920 cm$^{-1}$

ICO1: Infrarotabsorptionspeak bei 1780 bis 1790 cm$^{-1}$
ICO2: Infrarotabsorptionspeak bei 1710 bis 1720 cm$^{-1}$
ICO3: ICO1 + ICO2.

**2.** Polyolefinharzzusammensetzung nach Anspruch 1, worin ein Zusammensetzungs-Massenverhältnis von modifiziertes Schichtsilikat/modifiziertes Polyolefinharzes/Polyolefinharz 0,01-40/0,1-50/50-99,89 beträgt.

**3.** Polyolefinharzzusammensetzung nach einem der Ansprüche 1 oder 2, worin das modifizierte Schichtsilikat durch ein Zwischenschicht-Insertionsverfahren hergestellt wird, umfassend das Einführen eines nicht-ionischen oberflächenaktiven Mittels in die Zwischenschichträume des Schichtsilikats.

**4.** Polyolefinharzzusammensetzung nach einem der Ansprüche 1 bis 3, worin das Polyolefinharz ein Polyethylenharz ist.

**5.** Verfahren zur Herstellung der Polyolefinharzzusammensetzung nach einem der Ansprüche 1 bis 4, wobei das Verfahren das Vermischen des modifizierten Schichtsilikats, des modifizierten Polyolefinharzes und des Polyolefinharzes in der Schmelze umfasst.

**Revendications**

**1.** Composition de résine polyoléfinique comprenant un silicate stratifié modifié, une résine polyoléfinique modifiée et une résine polyoléfinique, la résine polyoléfinique modifiée ayant un degré de modification avec un acide carboxylique (Pc1) de 0,030 à 0,100, qui est obtenu à partir du spectre d'absorption infrarouge à l'aide de l'équation (1), et un degré de modification par des groupes carboxyle à liaison hydrogène (PcH) d'au moins 0,80, qui est obtenu à l'aide de l'équation (2).

$$Pc1 = ICO3/ICH_2 \qquad\qquad (1)$$

$$PcH = ICO2/(ICO1 + ICO2) \qquad\qquad (2)$$

où:

ICH$_2$: pic d'absorption infrarouge à 2920 cm$^{-1}$
ICO1: pic d'absorption infrarouge à 1780 à 1790 cm$^{-1}$
ICO2: pic d'absorption infrarouge à 1710 à 1720 cm$^{-1}$
ICO3: ICO1 + ICO2

**2.** Composition de résine polyoléfinique selon la revendication 1, dans laquelle le rapport en masse de composition du silicate stratifié modifié / la résine polyoléfinique modifiée / la résine polyoléfinique est de 0,01-40 / 0,1-50 / 50-99,89.

**3.** Composition de résine polyoléfinique selon l'une ou l'autre des revendications 1 et 2, dans laquelle le silicate stratifié modifié est préparé par un procédé d'insertion intercouches comprenant l'insertion d'un agent tensioactif non ionique dans les espaces intercouches du silicate stratifié.

**4.** Composition de résine polyoléfinique selon l'une quelconque des revendications 1 à 3, dans laquelle la résine polyoléfinique est une résine polyéthylénique.

**5.** Procédé de préparation de la composition de résine polyoléfinique selon l'une quelconque des revendications 1 à 4, ce procédé comprenant le mélange à l'état fondu du silicate stratifié modifié, de la résine polyoléfinique modifiée et de la résine polyoléfinique.

Fig1

Fig2

Fig3

Fig4

Fig5